Europäisches Patentamt

European Patent Office

Office européen des brevets

(11) Veröffentlichungsnummer: **0 000 905**
**B1**

(12) **EUROPÄISCHE PATENTSCHRIFT**

(21) Anmeldenummer: **78100641.6**

(22) Anmeldetag: **10.08.78**

(51) Int. Cl.³: **B 60 D 7/00**

(54) **Strassenfahrzeug mit zwei über ein Gelenk miteinander verbundenen Fahrzeugteilen**

(30) Priorität: **25.08.77 DE 2738311**

(43) Veröffentlichungstag der Anmeldung:
**07.03.79 Patentblatt 79/05**

(45) Bekanntmachung des Hinweises auf die Patenterteilung:
**20.08.80 Patentblatt 80/17**

(84) Benannte Vertragsstaaten:
**BE CH DE FR NL SE**

(56) Entgegenhaltungen:
**CH - A - 336 862**
**DE - A - 1 455 167**
**DE - B - 1 057 163**
**DE - C - 691 015**
**DE - C - 918 864**
**US - A - 3 740 076**

(73) Patentinhaber: **Hamburger Hochbahn Aktien-gesellschaft**
**Steinstrasse 20**
**D - 2000 Hamburg 1 (DE)**

(72) Erfinder: **Buschenhenke, Werner**
**Düpweg 20**
**D - 2000 Hamburg 61 (DE)**

(74) Vertreter: **Glawe, Richard, Dr.**
**Postfach 37**
**D - 8000 München 26 (DE)**

Courier Press, Leamington Spa, England.

Straßenfahrzeug mit zwei über ein Gelenk mit einander verbundenen Fahrzeugteilen

Die Erfindung bezieht sich auf ein Straßenfahrzeug mit zwei Fahrzeugteilen, die über ein Gelenk mieinander verbunden sind, das mit Dämpfungs- und/oder Blockiereinrichtungen versehen ist, die beiderseits des Gelenks je ein Paar von Stützarmen umfassen, deren Enden bei Knickung des Gelenks in einem Richtungssinn mit Anschlagflächen gegeneinander gespannt sind.

Es sind bei Schienenfahrzeugen Stützarme bekannt, deren Anschlagplatten zwecks besserer Abwälzung konvex gegeneinander gewölbt sind (DE—PS 918 864). Dies führt im allgemeinen, auch bei Straßenfahrzeugen, zu einwandfreier Funktion; jedoch hat man festgestellt, daß in manchen Fällen die Dämpfungskraft sich ruckweise ändert. Man glaubte zunächst, daß für die ruckweise Änderung der Dämpfungskraft irgendwelche Fehler in der Dämpfungshydraulik verantwortlich seien.

Die Erfindung liegt daher die Aufgabe zugrunde, ein Fahrzeug der eingangs genannten Art zu schaffen, dessen Dämpfungseinrichtung ruckfrei arbeitet.

Die erfindungsgemäße Lösung besteht darin, daß die zusammenwirkenden Anschlagflächen der Stützarme mit ineinandergreifenden, eine seitliche Relativbewegung verhindernden Erhöhungen und Vertiefungen versehen sind.

Es sind zwar Kupplungselemente mit eine seitliche Relativbewegung verhindernden Erhöhungen und Vertiefungen bekannt (CH—PS 336 862), die jedoch eine Relativbewegung in Querrichtung zwischen den zwei miteinander gekuppelten Schienenfahrzeugen verhindern sollen. Diese Problematik tritt beim erfindungsgemäßen Straßenfahrzeug nicht auf, da beide Fahrzeuge durch ein gemeinsames Drehgelenk verbunden sind, so daß eine solche seitliche Relativbewegung der beiden Fahrzeugteile an der Verbindungsstelle gar nicht auftreten kann. Die Erfindung besteht auch nicht darin, besondere mit Erhöhungen und Vertiefungen versehene zusätzliche Teile vorzusehen, sondern ohnehin vorgesehene Teile mit solchen Erhöhungen und Vertiefungen zu versehen.

Durch die erfindungsgemäßen Maßnahmen konnten die ruckartigen Änderungen der Dämpfungskraft vermieden werden. Diese beruht nämlich nicht, wie man zunächst dachte, auf einem fehlerhaften Arbeiten der mit den Stützarmen verbundenen Dämpfungshydraulik, sondern darauf, daß beim Auftreten von unterschiedlichen Dämpfungskräften an den miteinander verbundenen Stützarmen seitliche Relativebewegungen an den Anschlagflächen auftraten, die durch die erfindungsgemäße Ausbildung verhütet werden.

Damit die Anschlagflächen trotz der Erhöhungen und Vertiefungen noch einwandfrei aufeinander abwälzen können, sind die Erhöhungen und Vertiefungen auf den in an sich bekannter Weise konvex ausgebildeten Anschlagflächen zweckmäßigerweise als Verzahnung ausgebildet.

Damit die Erhöhungen und Vertiefungen richtig ineinandergreifen, wenn die Anschlagflächen nach einer Lösung voneinander wieder zusammenkommen, sind die oben erwähnten Anschläge vorgesehen, die dafür sorgen, daß die Stützarme mit den daran befindlichen Anschlagflächen im gelösten Zustand eine definierte Stellung einnehmen.

Wenn die Anschlagplatten nicht ständig in gegenseitigem Kontakt gehalten sind, sondern bei einer Knickung des Gelenks in dem anderen Richtungssinn sich voneinander lösen, ist es vorteilhaft, die voneinander gelösten Stützarme durch Anschläge eingriffsbereit zu halten.

Die Erfindung wird im folgenden näher unter Bezugnahme auf das in der Zeichnung schematisch dargestellte Ausführungsbeispiel beschrieben. Darin zeigen:

Fig. 1 eine schematische Draufsicht auf den Gelenkbereich bei Geradeausfahrt und

Fig. 2 eine entsprechende Draufsicht bei Kurvenfahrt.

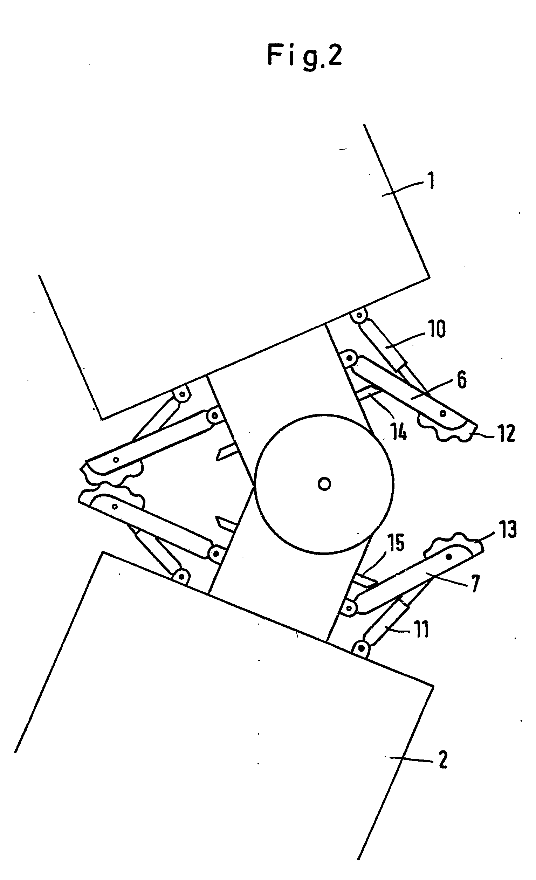

Bei 1 und 2 sind der vordere und der hintere Fahrzeugteil angeordnet. Ihre Fahrgestelle strecken einander Fortsätze 3, 4 entgegen, die durch das Gelenk 5 mit vertikaler Achse verbunden sind, so daß sie bei einer Linkskurve sich beispielsweise gemäß Fig. 2 einstellen können.

Auf jeder Gelenkseite ist ein Paar von Stützarmen 6, 7 vorgesehen, die durch hydraulische Einrichtungen 10, 11 gegeneinander gespannt werden. Selbstverständlich könnten aber auch andere Einrichtungen als hydraulische vorgesehen sein, um an den Stützarme 6, 7 eine Kraft zu erzeugen, die das Gelenk gegenüber einer übermäßigen oder zu raschen Knickung abstützt. Die Stützarme 6, 7 sind bei 19, 20 an den Fortsätzen 3, 4 angelenkt. Die Anlenkpunkte liegen exentrisch zu dem Gelenk 5. Die Anlenkachsen 19 und 20 sowie die Gelenkachse 5 sind zueinander parallel und in Betriebsstellung im wesentlichen vertikal.

Die Stützarme 6, 7 tragen an ihren Enden starr mit den Armen verbundene Druckplatten, die die Anschlagflächen 12, 13 bilden, die mit gewellten, ineinandergreifenden Zahnungen 16, 17 versehen sind. Der Zahneingriff sorgt für einen gleichmäßen und gleichbleibenden Eingriff selbst dann, wenn die durch die hydraulischen Einrichtungen 10, 11 verursachten Stützkräfte oder die an den Anlenkpunkten 19, 20 auftretenden Reibungen unterschiedlich sein sollten. Die Stützarme sind zusätzlich zu der Dämpfungskraft, die hydraulisch in den Zylindern der Einrichtungen 10, 11 erzeugt werden kann, ständig von einer nachgiebigen Rückführkraft beaufschlagt, die den Winkel zwischen den Stützarmen und der Fahrzeuglängsachse zu verkleinern bestrebt ist. Diese Rückstellkraft kann auch hydraulisch in den Zylindern der Einrichtungen 10, 11 erzeugt werden.

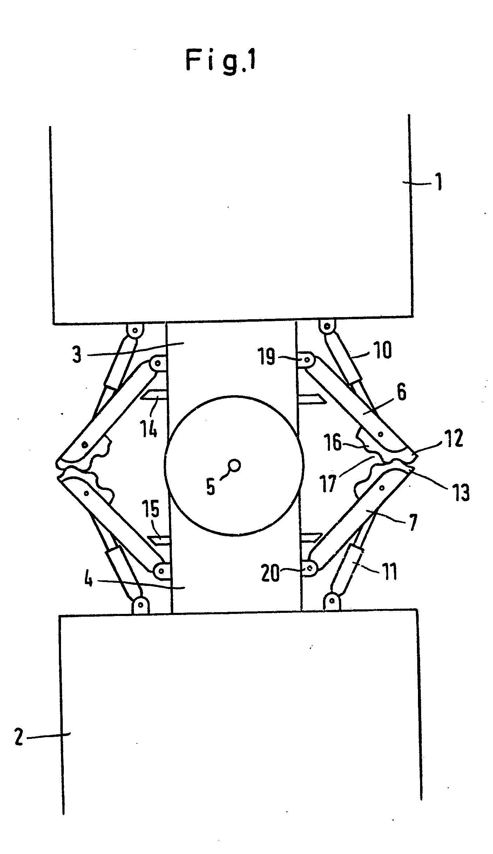

Bei Geradeausfahrt liegen die Anschlagflächen 12, 13 aneinander an (Fig. 1). Bei Kurvenfahrt vergrößert sich der Winkel zwischen den auf der Kurveninnenseite liegenden Stützarmen und der Fahrzeuglängsrichtung (Fig. 2 links) während sie sich auf der anderen Seite (Fig. 2 rechts) voneinander lösen. In diesem voneinander gelösten Zustand wird die Stellung der Stützarme durch Anschläge 14, 15 bestimmt, an die sich die Stützarme unter der Rückführkraft anlegen. Sie nehmen dann gleiche Winkel zur Fahrzeuglängsachse ein, wenn sie gleich lang sind. Jedenfalls haben ihre Anschlagflächen dann einen gleichen Abstand von der Gelenkachse 5. Die Anschläge 14, 15 sind also derart positioniert, daß die Zähne der Anschlagflächen 12, 13 wieder den richtigen Eingriff finden, wenn die Fahrzeugteile in die Geradeausstellung zurückkehren. Die Verzahnung kann gegebenenfalls auf einen Zahn in der einen Druckplatte und auf 2 Zähne in der damit zusammenwirkenden Gegendruckplatte reduziert werden.

## Patentansprüche

1. Straßenfahrzeug mit zwei Fahrzeugteilen, die über ein Gelenk miteinander verbunden sind, das mit Dämpfungs- und/oder Blockiereinrichtungen versehen ist, die beiderseits des Gelenks je ein Paar von Stützarmen umfassen, deren Enden bei Knickung des Gelenks in einem Richtungssinn mit Anschlagflächen gegeneinander gespannt sind, dadurch gekennzeichnet, daß die zusammenwirkenden Anschlagflächen (12, 13) der Stützarme (6, 7) mit ineinandergreifenden, eine seitliche Relativbewegung verhindernden Erhöhungen (16) und Vertiefungen (17) versehen sind.

2. Straßenfahrzeug nach Anspruch 1, dadurch gekennzeichnet, daß die Anschlagflächen (12, 13) um parallel zur Gelenkachse liegende Achsen konvex gekrümmt und mit einer Verzahnung versehen sind.

3. Straßenfahrzeug nach Anspruch 1 oder 2, dadurch gekennzeichnet, daß die Anschlagflächen (12, 13) der Stützarme sich bei Knickung des Gelenks im anderen Richtungssinn voneinander lösen und durch Anschläge (14, 15) in eingriffsbereiter Stellung gehalten sind.

## Revendications

1. Véhicule routier en deux parties reliées entre elles par une articulation, munies de dispositifs d'amortissement et/ou de blocage, comprenant chacune, de part et d'autre de l'articulation, une paire de bras d'appui dont les extrémités sont serrées l'une contre l'autre par des surfaces de butée, quand l'articulation pivote dans un sens, caractérisé en ce que les surfaces de butée (12, 13) coopérantes des bras d'appui (6, 7) sont munies de bossages (16) et de creux (17), en prise les uns avec les autres et empêchant un mouvement latéral relatif.

2. Véhicule routier suivant la revendication 1, caractérisé en ce que les surfaces de butée (12, 13) sont convexes, centrées sur des axes parallèles à l'axe d'articulation et munies d'une denture.

3. Véhicule routier suivant les revendications 1 et 2, caractérisé en ce que les surfaces de butée (12, 13) des bras d'appui s'écartent l'une de l'autre dans l'autre sens quand l'articulation pivote et en ce que des butées (14, 15) les maintiennent dans la position où elles sont prêtes à engrener.

## Claims

1. A road vehicle with two vehicle parts which are interconnected via an articulation which is provided with damping and/or locking devices which, on either side of the articulation, each comprise a pair of supporting arms, the ends of which during hinging of the articulation in one direction are pressed against one another with stop faces, characterised in that the co-operating stop faces (12, 13) of the supporting arms (6, 7) are provided with protuberances (16) and recesses (17) which engage one another and prevent any lateral relative movement.

2. A road vehicle according to claim 1, characterised in that the stop faces (12, 13) are convexly curved about axes lying parallel to the articulation axis and are provided with teeth.

3. A road vehicle according to claim 1 or claim 2, characterised in that the stop faces (12, 13) of the supporting arms are disengaged from one another during hinging of the articulation in the other direction and are kept by stops (14, 15) in a position ready for engagement.

# Fig.1

# Fig.2